Europäisches Patentamt

European Patent Office

Office européen des brevets

(19)

(11) EP 0 696 876 A2

(12) EUROPEAN PATENT APPLICATION

(43) Date of publication:
14.02.1996 Bulletin 1996/07

(51) Int. Cl.⁶: H04N 9/64, H04N 5/445

(21) Application number: 95112698.6

(22) Date of filing: 11.08.1995

(84) Designated Contracting States:
DE GB

(30) Priority: 11.08.1994 JP 189329/94

(71) Applicant: SANYO ELECTRIC Co., Ltd.
Moriguchi-shi, Osaka (JP)

(72) Inventors:
• Ishii, Takaaki
Higashiosaka-shi, Osaka (JP)
• Hirao, Yoshitika
Neyagawa-shi, Osaka (JP)

(74) Representative: Glawe, Delfs, Moll & Partner
D-80058 München (DE)

(54) Superimposing circuit

(57) A superimposing circuit (1∅) includes a PAL ID circuit (5∅) in which phases of an external burst signal and a CDG burst signal are compared with each other. If the phases are not coincident with each other, it is determined that polarities of the burst signals are not coincident with each other, and therefore, the PAL ID cir- cuit (5∅) outputs a PAL ID signal to a color encoder (28). In response to the PAL ID signal, the color encoder (28) stops a changeover of the polarity at every 2H such that the polarities of the both burst signals can be made to be coincident with each other.

FIG. 1

EP 0 696 876 A2

# Description

## BACKGROUND OF THE INVENTION

### Field of the invention

The present invention relates to a superimposing circuit. More specifically, the present invention relates to a superimposing circuit which displays an external video signal of a PAL system and a graphics composite video signal in a superimposed manner on a screen.

### Description of the prior art

In a composite color television signal of the PAL system, a phase of a burst signal with respect to a B-Y signal is changed-over at +135 degrees or -135 degrees at every 2H.

In a case where two video signals are displayed in a superimposed manner with utilizing the composite color television signals of the PAL system, it is impossible to normally display if the horizontal synchronization, the vertical synchronization and the synchronization of the burst signals of the two composite color television signals are not established and the polarities of the burst signals are not coincident with each other.

In the past, in a case where the superimposing of the two video signals are performed, the composite color television signals are demodulated into R G B signals, and then, the R G B signals are superimposed, and thereafter, the superimposed R G B signals are converted again into a composite color television signal.

In the above described prior art method, it becomes to have nothing to do with the changeover of the polarities of the burst signals at a time that the two R G B signals are superimposed; however, a demodulator and a modulator for the composite color television signals are newly required, and three sets of the video mixing portions for the R G B signals are required, and therefore, the structure becomes complex.

## SUMMARY OF THE INVENTION

Therefore, a principal object of the present invention is to provide a superimposing circuit capable of performing the superimposing with simple structure.

A first aspect according to the invention is a superimposing circuit by which an external composite video signal of a PAL system and a graphics composite video signal are displayed in a superimposed manner on a screen characterized in that the superimposing circuit comprises a clock generating means for generating a clock which is in synchronous with an external burst signal included in the external composite video signal, an encoder for producing the graphics composite video signal on the basis of the clock, a polarity detection means for detecting respective polarities of a graphic burst signal included in the graphics composite video signal and the external burst signal, and a polarity coincidence means for making the polarities of the external burst signal and the graphics burst signal coincident with each other on the basis of an output of the polarity detection means.

A second aspect according to the invention is a superimposing circuit by which an external composite video signal and a graphics composite video signal are displayed in a superimposed manner on a screen characterized in that the superimposing circuit comprises a phase-comparison means for comparing phases of an external burst signal included in the external composite video signal or a synchronization signal which is in synchronous with the external burst signal and a graphics burst signal included in the graphics composite video signal, and a phase-shifting means for making the phases of the external burst signal and the graphics burst signal coincident with each other on the basis of an output of the phase-comparison means.

In the first aspect, the clock which is in synchronous with the external burst signal is generated by the clock generating means. In the encoder, the graphics composite video signal is produced on the basis of the clock. The phase of the graphics burst signal included in the graphics composite video signal and the phase of the external burst signal included in the external composite video signal are compared with each other by a phase-comparison means of the polarity detection means. It is detected whether or not the polarities of the burst signals are coincident with each other by comparing an output of the phase-comparison means and a reference value by means of a 1H polarity detection means.

If not coincident, the polarities are adjusted by the polarity coincidence means such that the polarities of the external burst signal and the graphics burst signal can be made to be coincident with each other. For example, if the phase-comparison means detects that the phases of the external burst signal and the graphics burst signal are not coincident with each other, the output of the phase-comparison means and the reference value are compared with each other by the 1H polarity detection means, and therefore, it is determined that the polarities are not coincident with each other. In response thereto, the polarity coincidence means stops a changeover of the polarity of the graphic burst signal performed by a polarity changeover means of the encoder, whereby the polarities of the graphics burst signal and the external burst signal can be made to be coincident with each other.

In addition, if a signal which is set in association with the external burst signal is utilized as the reference value, when the external composite video signal is changed, the reference value is also changed in association with the external composite video signal, and therefore, on the basis of such the reference value, the coincidence/incoincidence of the polarities can be detected by the 1H polarity detection means.

Furthermore, if the external composite video signal is a monochrome television signal which includes no external burst signal, a result of the phase-comparison of the external burst signal and the graphics burst signal becomes a phase error, and therefore, a malfunction occurs in the polarity coincidence means. For example, a malfunction occurs in the changing-over operation of the polarity of the graphics burst signal in the encoder. Therefore, presence or absence of the external burst signal is detected by the burst presence/absence detection means, and if the external composite video signal is a monochrome television signal having no external burst signal, a signal indicating that the polarities are coincident with each other is outputted from the polarity detection means to the polarity coincidence means, and therefore, the polarity coincidence means operates on the assumption that the polarities are coincidence with each other. Therefore, even if the phase-comparison of the external burst signal and the graphics burst signal becomes the phase error, the polarity coincidence means determines that the polarities of the external burst signal and the graphics burst signal are coincident with each other, and therefore, the changing-over operation of the polarity of the graphics burst signal which is performed in the encoder is continued.

In the second aspect, the phase-comparison means compares the external burst signal of the external composite video signal or the synchronization signal which is in synchronous with the external burst signal and the graphics burst signal included in the graphics composite video signal, and according to a result of the phase-comparison, the phase of the graphics burst signal is automatically adjusted by the phase-shifting means, whereby the phases of the external burst signal and the graphic burst signal are made to be coincident with each other.

In accordance with the first invention, even if the external composite video signal is a composite video signal of a PAL system, it is possible to easily make the polarities of the burst signals coincident with each other with simple structure. Furthermore, if the external composite video signal is a monochrome television signal, no malfunction occurs.

Furthermore, since the reference value is changed in association with the change of the external burst signal, i.e. the external composite video signal, if the external composite video signal is a weak electric field signal or an abnormal signal, the malfunction can be reduced.

In accordance with the second invention, the phases of the external burst signal of the external composite video signal and the graphics burst signal of the graphics composite video signal are automatically adjusted, and therefore, the number of the components and the number of the steps can be reduced, and the scattering of the adjustment and the scattering of the accuracy due to the change with time also can be prevented.

The above described objects and other objects, features, aspects and advantages of the present invention will become more apparent from the following detailed description of the present invention when taken in conjunction with the accompanying drawings.

## BRIEF DESCRIPTION OF THE DRAWINGS

Figure 1 is a block diagram showing one embodiment according to the invention;

Figure 2 is a block diagram showing one example of structure of a CDG system included in Figure 1 embodiment;

Figure 3 is a block diagram showing one example of structure of a PAL ID circuit and a color encoder;

Figure 4 is a waveform chart showing an external burst signal, a CDG burst signal, and an output from a phase-comparator;

Figure 5 is a circuit diagram showing one example of a 1H polarity detection circuit;

Figure 6 is a waveform chart showing major outputs of the circuits shown in Figure 3;

Figure 7 is a circuit diagram showing one example of a burst presence/absence detection circuit;

Figure 8 is a waveform chart showing one example of the external burst signal, the CDG burst signal, and an output from an exclusive OR circuit at a time that there is the external burst signal;

Figure 9 is a waveform chart showing one example of the external burst signal, the CDG burst signal, and the output from an exclusive OR circuit at a time that there is no external burst signal;

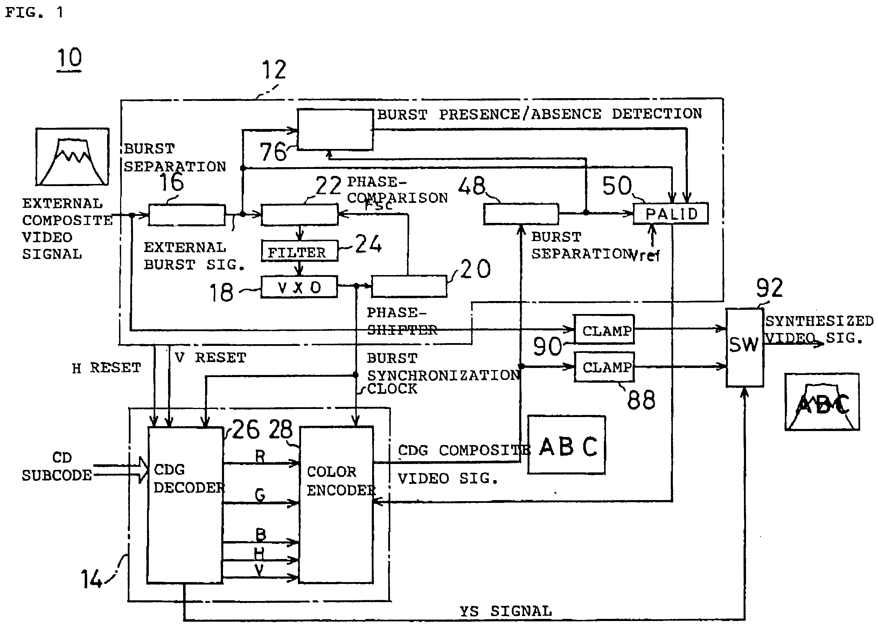

Figure 1∅ is a block diagram showing another embodiment according to the invention;

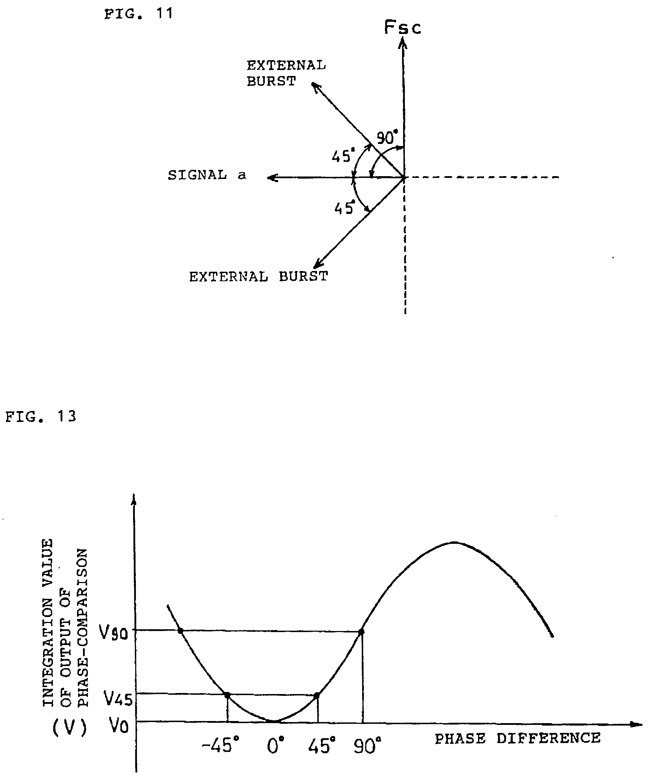

Figure 11 is an illustrative view showing a relationship of phases of the external burst signal, an Fsc signal, and a signal a;

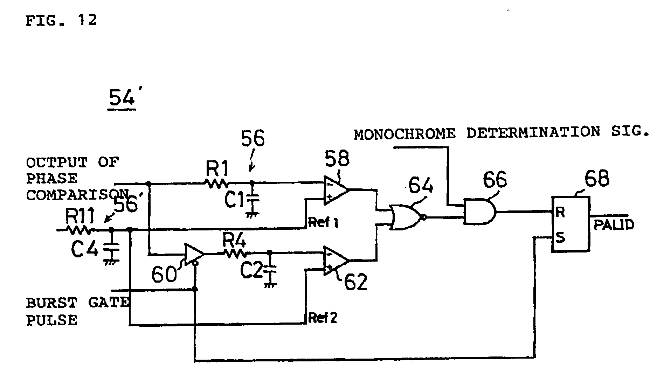

Figure 12 is a circuit diagram showing a modified example of the 1H polarity detection circuit; and

Figure 13 is a waveform chart showing a relationship between a phase difference and an integration value of an output of a phase-comparator.

## DETAILED DESCRIPTION OF THE PREFERRED EMBODIMENTS

With referring to Figure 1, a superimposing circuit 1∅ of this embodiment shown includes a clock generating circuit 12 and a CDG (CD graphics) system 14.

An external composite video signal which becomes a parent or main screen of the superimposing display is applied to the clock generating circuit 12, and only an external burst signal is derived from the external composite video signal by a burst separation circuit 16. A derived external burst signal is phase-compared with an Fsc signal (sub-carrier signal) which is outputted from a VXO (voltage-controlled oscillator) 18 and passed through a phase-shifter 2∅ by a phase-comparison circuit 22. An output of the phase-comparison circuit 22 is smoothed by a filter 24 to control the VXO 18, whereby the external burst signal and the Fsc signal become to be in synchronous with each other. According to a characteristic of the phase-comparison circuit 22, phases of the external burst signal and the Fsc signal which are inputted to the phase-comparison circuit 22 can be maintained at constant, and therefore, a phase of a burst synchronization clock which is an output of the VXO 18 is changed by the phase-shifter 2∅.

The burst synchronization clock is applied to a CDG (CD graphics) decoder 26 and a digital color encoder 28 of the CDG system 14. The burst synchronization clock is in synchronous with the external burst signal. In addition, an H reset pulse being in synchronous with a horizontal synchronization signal of the external composite video signal and a V reset signal being in synchronous with a vertical synchronization signal of the external composite video signal are outputted to the CDG decoder 26 from the clock generating circuit 12.

Now, a description is made on the CDG system 14 which produces a CDG composite video signal by which a child or subscreen is displayed.

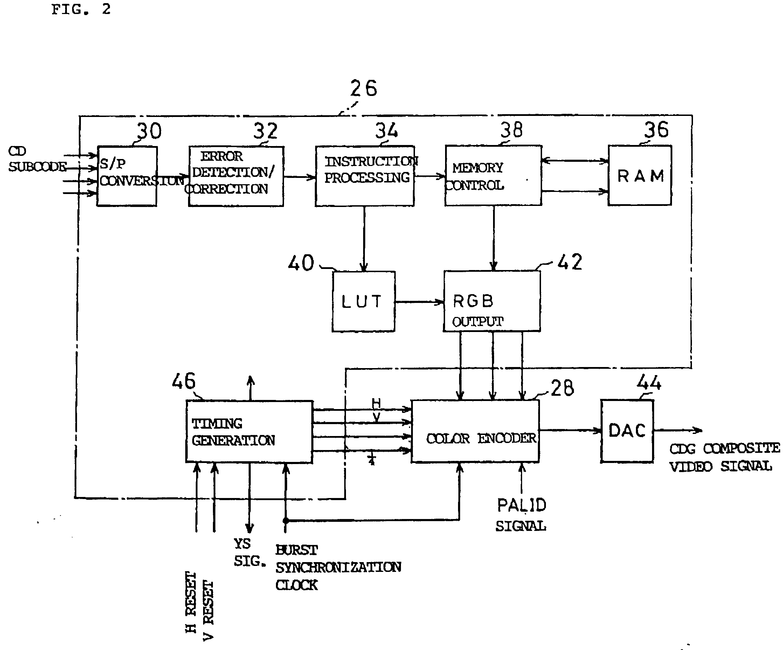

With referring to Figure 2, a subcode read-out from an empty area of a CD (not shown) such as an audio compact disc includes data (PW), a frame synchronization signal (SFSY), a clock (SBCK) and a block synchronization signal (SBSY). The subcode is subjected to a serial/parallel conversion by a serial/parallel conversion circuit 3∅, and then, applied to an error detection/correction circuit 3∅. The subcode is subjected to the error detection and the error correction by the error detection/correction circuit 3∅, and thereafter, applied to an instruction processing circuit 34 which controls a memory control circuit 38 for writing data into a RAM 36, and sets a color in an LUT (look-up table) 4∅ on the basis of the subcode. Thus, CDG instructions are processed by the instruction processing circuit 34. Then, display data is outputted from an RGB output circuit 42 to the color encoder 28 as RGB video data.

More specifically, in the CDG decoder 26, the RGB video data, and an H pulse and a V pulse which are in synchronous with the horizontal and vertical timings of the external composite video signal are produced on the basis of the H reset pulse and the V reset pulse which are applied from the clock generating circuit 12 to a timing generation circuit 46. The RGB video data, the H pulse and the V pulse are outputted to the color encoder 28. The H pulse and the V pulse are applied to the color encoder 28 from the timing generation circuit 46.

In addition, if it is not required to perform the superimposing operation, the burst synchronization clock and 4-divided clock which is obtained by frequency-dividing the burst synchronization clock by 1/4 are applied to the color encoder 28 from the timing generation circuit 46.

Then, the CDG composite video signal is produced by the color encoder 28 through the encoding of the RGB video data, the H pulse and the V pulse, and the CDG composite video signal is converted into an analog signal by a DAC (digital-analog converter) 44 and outputted as the CDG composite video signal.

The CDG composite video signal thus outputted from the color encoder 28 and converted into the analog signal is applied to a burst separation circuit 48 of the clock generating circuit 12. By the burst separation circuit 48, a CDG burst signal is separated from the CDG composite video signal, and the same is applied to a PAL ID (identification) circuit 5∅ in which the external burst signal from the burst separation circuit 16 and the CDG burst signal are compared with each other.

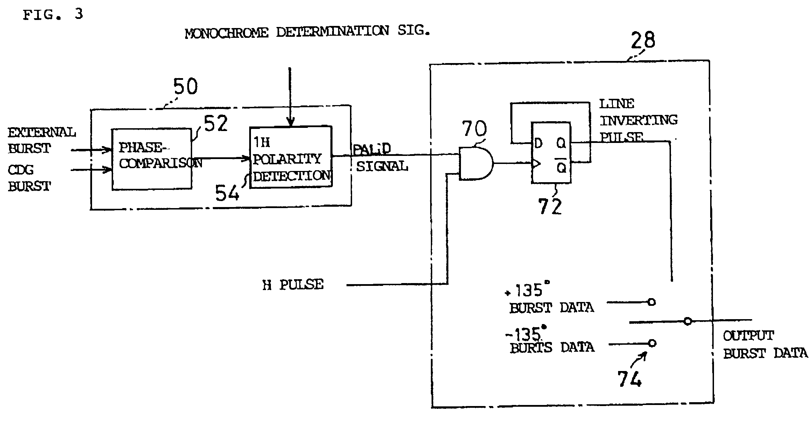

As shown in Figure 3, the PAL ID circuit 5∅ includes a phase-comparison circuit 52 and a 1H polarity detection circuit 54, and the external burst signal and the CDG burst signal are phase-compared with each other by the phase-comparison circuit 52, and an output according to a phase difference of the burst signals is outputted to the IH polarity detection circuit 54.

When polarities of the external burst signal and the CDG burst signal are coincident with each other, the external burst signal and the CDG burst signal become as shown in Figure 4(A) and Figure 4(B), and the output of the phase-comparison circuit 52 becomes approximately "Low" as shown in Figure 4(C). On the other hand, when the polarities of the external burst signal and the CDG burst signal are not coincident with each other, the external burst signal and the CDG burst signal become as shown in Figure 4(D) and Figure 4(E), and the output of the phase-comparison circuit 52 becomes approximately as shown in Figure 4(F) because there is a phase difference of 9∅ degrees between the external burst signal and the CDG burst signal.

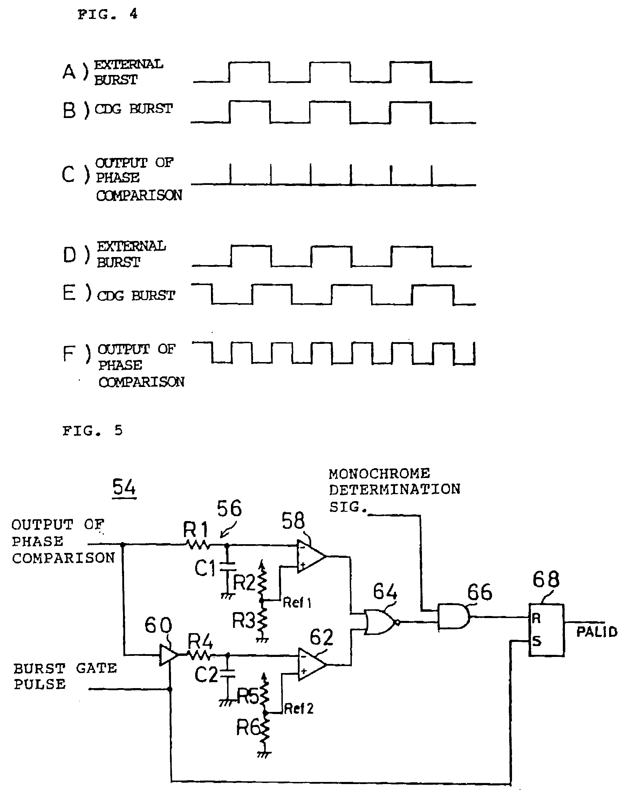

In the 1H polarity detection circuit 54, an error of a changeover of the polarity by detecting whether or not an integration value of the output of the phase-comparison circuit 52 is larger than a predetermined level. The 1H polarity detection circuit 54 is constructed as shown in Figure 5.

In the 1H polarity detection circuit 54 shown in Figure 5, the output of the phase-comparison circuit 52 is integrated by an LPF (low-pass filter) 56 being constituted by a resistor R1 and a capacitor C1, and an integration signal is applied to an inverted input terminal of a comparator 58. A predetermined DC level (Ref1) determined by resistors R2 and R3 is applied to a non-inverted input terminal of the comparator 58. Then, the integration signal to the inverted input terminal of the comparator 58 is compared with the DC level (Ref1), and if the former is larger than the latter, "Low" is outputted from the comparator 58, and otherwise, "High" is outputted from the comparator 58. That is, the output of the comparator 58 becomes "Low" at a time that the polarities of the external burst signal and the CDG burst signal are not coincident with each other, and the output of the comparator 58 becomes "High" at a time that the polarities of the external burst signal and the CDG burst signal are coincident with each other.

In order to prevent a malfunction due to a weak electric field of a television signal, the phase-compared output is derived through a 3-state buffer 6∅ only for a burst gate period so as to charge a capacitor C2, whereby a continuity of the error of the polarity can be determined.

More specifically, if the polarities are continuously not coincident with each other, the capacitor C2 is charged, and a charged voltage is applied to an inverted input terminal of a comparator 62. A predetermined DC level (Ref2) determined by resistors R5 and R6 is applied to a non-inverted input terminal of the comparator 62. Then, the charged voltage to the inverted input terminal of the comparator 62 is compared with the DC level (Ref2), and if the former is larger than the latter, "Low" is outputted from the comparator 62, and otherwise, "High" is outputted from the comparator 62.

The output of the comparator 62 and the output of the comparator 58 are applied to a NOR circuit 64. By taking NOR of the outputs by the NOR circuit 64, "High" is outputted by the NOR circuit 64 when the outputs of the comparators 58 and 62 are respectively "Low". That is, if the phase-compared output of the phase-comparison circuit 52 continuously indicates the error for a predetermined period, it is determined that the polarities of the external burst signal and the CDG burst signal are in error, whereby it is possible to prevent the malfunction due to the weak electric field or the like.

An output of the NOR circuit 64 is applied to an AND circuit 66 and ANDed with a monochrome determination signal (described later). Therefore, the output of the NOR circuit 64 becomes a reset signal for an RS flip-flop 68 only when the monochrome determination signal is "High". In addition, the RS flip-flop 68 is reset by the burst gate pulse.

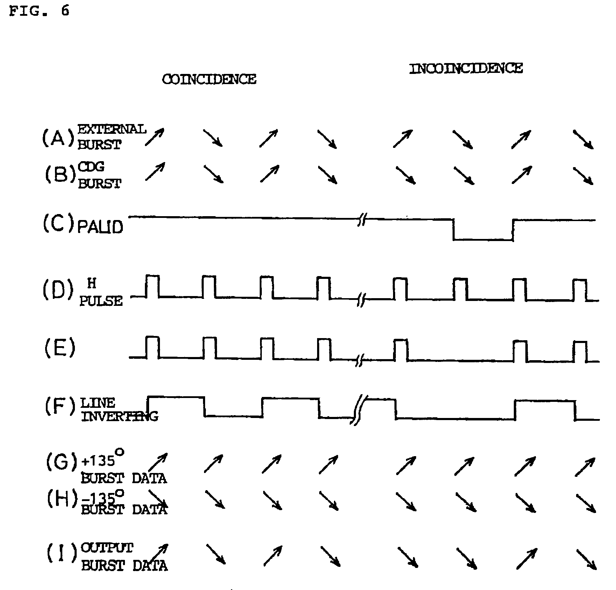

When the monochrome determination signal is "High", a PAL ID signal which is outputted from the 1H polarity detection circuit 54 indicates whether or not the polarities of the external burst signal and the CDG burst signal are correct. As shown in Figure 6(A) to Figure 6(C), the PAL ID signal becomes "High" if the polarities of the external burst signal and the CDG burst signal are coincident with each other, and "Low" if the polarities of the external burst signal and the CDG burst signal are not coincident with each other, i.e., at a time of the error.

Returning to Figure 3, the PAL ID signal is applied to an AND circuit 7∅ of the color encoder 28. The H pulse as shown in Figure 6(D) is further applied to the AND circuit 7∅.

Accordingly, when the PAL ID signal is "High" and the H pulse from the CDG decoder 26 is applied to the AND circuit 7∅, a signal of "High" as shown in Figure 6(E) is applied to D flip-flop 72 from the AND circuit 7∅. More specifically, when the PAL ID signal is "High", in the color encoder 28, the D flip-flop 72 is inverted at a leading edge of the H pulse from the CDG decoder 26 such that a line inverting pulse as shown in Figure 6(F) is outputted from the D flip-flop 72. In response to the line inverting pulse, a switch 74 is changed-over for 1H, and therefore, as an output burst data (CDG burst signal) shown in Figure 6(I), +135 degree burst data shown in Figure 6(G) and -135 degree burst data are outputted at every 2H, respectively.

On the other hand, if the polarities of the burst signals are not coincident with each other and the PAL ID signal is "Low", the H pulse shown in Figure 6(D) from the CDG decoder 26 is gated by the AND circuit 7∅, and therefore, the output of the AND circuit 7∅ becomes as shown in Figure 6(E), and accordingly, the line inverting pulse becomes "Low", whereby the line inversion is not performed. Accordingly, the burst data is not changed-over for 1H as shown in Figure 6(I), and thus, the polarity of the output burst signal (CDG burst signal) becomes to be coincident with the polarity of the external burst signal.

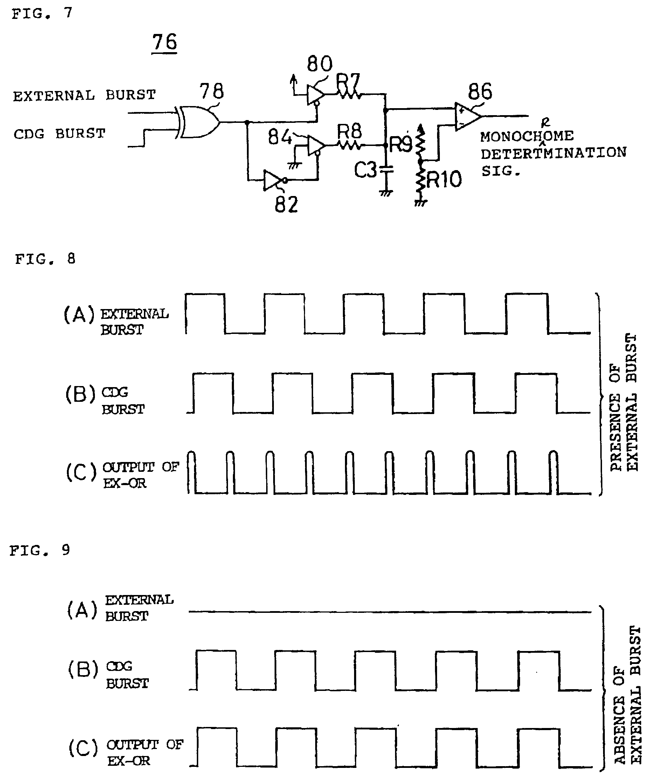

Now, a description will be made on a burst presence/absence detection circuit 76 which is constructed as shown in Figure 7, for example.

The burst presence/absence detection circuit 76 includes an exclusive OR circuit 78 in which the external burst signal and the CDG burst signal are phase-compared with each other, and a capacitor C3 is charged through a resistor R7 or the capacitor C3 is discharged through a resistor R8 in accordance with an output of the exclusive OR circuit 78.

More specifically, at a time that there is the external burst signal as shown in Figure 8(A), as shown in Figure 8(C), the output of the exclusive OR circuit 78 becomes approximately "Low". During a period that the output of the exclusive OR circuit 78 is "Low", a 3-state buffer 8∅ becomes conductive, and accordingly, the capacitor C3 is charged through the resistor R7. At that time, because the output of the exclusive OR circuit 78 is approximately "Low", a time that there is the external burst signal becomes a charging period for the capacitor C3. Therefore, when the external burst signal is present, a voltage of the capacitor C3 is increased.

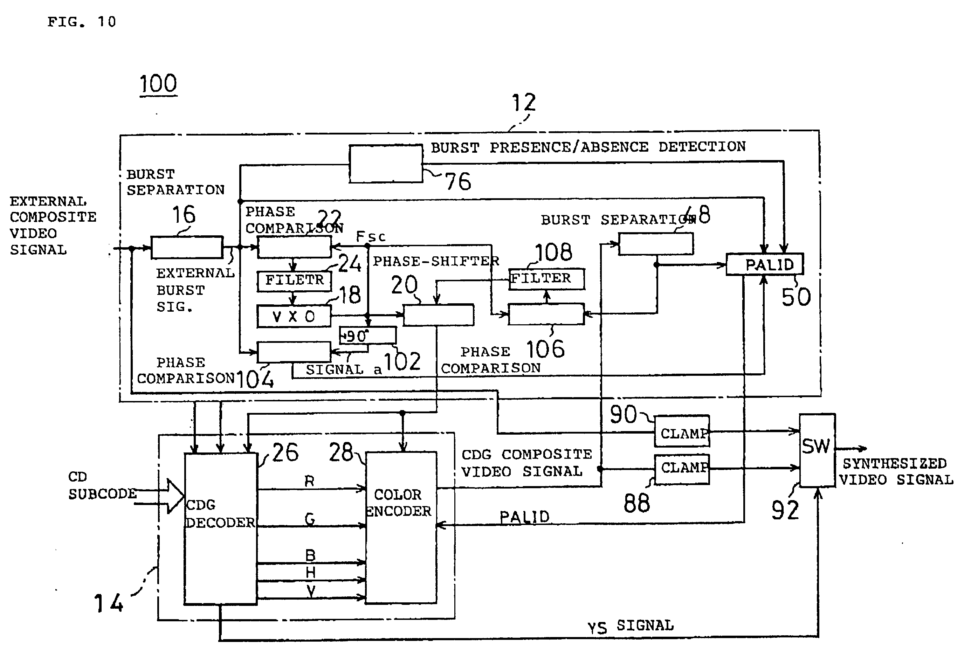

On the other hand, if there is no external burst signal as shown in Figure 9(A), as shown in Figure 9(C), a period of "High" of the output of the exclusive NOR circuit 78 becomes Longer than that of a case of Figure 8(C). Therefore, a period that the 3-state buffer 8∅ made to be conductive by an output of an inverter 82 becomes longer, and thus, a period that the capacitor C3 is discharged through the resistor R8 also becomes longer. Therefore, the voltage of the capacitor C3 is decreased.

The voltage of the capacitor C3 is applied to a non-inverted input terminal of a comparator 86, and compared with a DC level (Ref3) which is applied to an inverted input terminal of the comparator 86. The DC level (Ref3) is determined by resistors R9 and R1∅. The comparator 86 outputs a monochrome determination signal according to a comparison of the voltage of the capacitor C3 and the DC level. If the voltage of the capacitor C3 is larger than the DC level (Ref3), it is determined that the external composite video signal is a color television signal having the external burst signal, and the monochrome determination signal of "High" is outputted from the comparator 86. On the other hand, if the voltage of the capacitor C3 is smaller than the DC level (Ref3), it is determined that the external composite video signal is a monochrome television signal having no external burst signal, and the monochrome determination signal of "Low" is outputted from the comparator 86. The monochrome determination signal is inputted to the 1H polarity detection circuit 54 (Figures 3 and 5) of the PAL ID circuit 5∅.

When the monochrome determination signal is "High", the PAL ID signal from the 1H polarity detection circuit 54 is outputted in accordance with the output of the NOR circuit 64, and when the monochrome determination signal is "Low", the PAL ID signal outputted with being fixed at "High". At a time that the monochrome determination signal is "Low", i.e., at a time that the external composite video signal is the monochrome television signal, by fixing the PAL ID signal at "High", even if the external composite video signal is the monochrome television signal having no external burst signal, the malfunction of the changeover of the polarity can be prevented.

Returning to Figure 1, the CDG composite video signal which is outputted from the color encoder 28 with the polarity of the CDG burst signal being adjusted is in synchronous with the external composite video signal in all of the horizontal timing, the vertical timing and the burst timing.

The CDG composite video signal is clamped by a clamp circuit 88 while the external composite video signal is also clamped by a clamp circuit 9Ø. Thus, DC levels of the external composite video signal and the CDG composite video signal are made to be coincident with each other by the clamp circuits 88 and 9Ø, and by changing-over a switch 92 by a YS signal from the CDG decoder 26, the external composite video signal and the CDG composite video signal are superimposed, and a synthesized video signal is outputted.

According to this embodiment shown, since it is possible to make the polarities of the CDG burst signal coincident to the external composite video signal of the PAL system, as is different from the prior art, the superimposing display can be performed without new demodulator and modulator.

Next, a superimposing circuit 1ØØ of another embodiment shown in Figure 1Ø will be described.

The superimposing circuit 1ØØ includes a +9Ø degree shifting circuit 1Ø2, phase-comparison circuits 1Ø4 and 1Ø6, and a filter 1Ø8 in addition to the superimposing circuit 1Ø shown in Figure 1. In the following, different points will be mainly described, and since other portions are the same or similar to that of the superimposing circuit 1Ø, a duplicate description will be omitted by applying the same reference numerals.

The Fsc signal being in synchronous with the external burst signal is applied to the +9Ø degree shifting circuit 1Ø2, and inputted to the color encoder 28 via the phase-shifter 2Ø as the burst synchronization clock. The Fsc signal is directly inputted to the phase-comparison circuit 1Ø6 having other input to which the CDG burst signal being separated from the CDG composite video signal is applied. The Fsc signal and the CDG burst signal are phase-compared with each other by the phase-comparison circuit 1Ø6 an output of which is smoothed by the filter 1Ø8. The phase-shifter 2Ø is controlled by an output of the filter 1Ø8, and resultingly, phases of the Fsc signal and the CDG burst signal are kept at a constant phase difference, i.e., the Fsc signal and the CDG burst signal are made to be in synchronous with each other. That is, the CDG burst signal and the Fsc signal can be kept at the phase difference of 9Ø degrees (the CDG burst signal is advanced to the Fsc signal) by the phase-comparison circuit 1Ø6. In addition, the external burst signal and the Fsc signal also can be kept at the phase difference of 9Ø degrees (the external burst signal is advanced to the the Fsc signal) by the phase-comparison circuit 22.

Now, it is assumed that a phase delay of the CDG burst signal being outputted from the color encoder 28 with respect to the burst synchronization clock being inputted to the color encoder 28 is $\phi 1$, and a correction amount by the phase-shifter 2Ø is $\phi 2$.

When the phase of the external burst signal is used as a reference phase, if it is made as 9Ø degrees+$\phi1$=$\phi2$, the phases of the external burst signal and the CDG burst signal become to be coincident with each other. That is, if the correction amount $\phi 2$ is adjusted by the phase-shifter 2Ø such that the CDG burst signal is advanced to the Fsc signal by 9Ø degrees in the phase-comparison circuit 1Ø6, i.e., if it is adjusted as $\phi 2 = \phi 1+9Ø$ degrees, it is possible to make the phases of the external burst signal and the CDG burst signal be automatically coincident with other.

In addition, in a case where the input external composite video signal is a video signal of the PAL system as shown in this embodiment, if the external burst signal and the Fsc signal are in synchronous with each other, a relationship in phase as shown in Figure 11 can be obtained. More specifically, since the external burst signal is shifted by 9Ø degrees at every 2H, the external burst signal and the Fsc signal can be in synchronous with each other at the phase difference of 9Ø degrees (135 degrees and 45 degrees) in average. The Fsc signal is phase-shifted by 9Ø degrees by means of the +9Ø degree shifting circuit 1Ø2, and thus, the Fsc signal becomes a signal a, and then, is inputted to the phase-comparison circuit 1Ø4. A relationship between the external burst signal and the signal a is also indicated in Figure 11.

Then, as shown in Figure 1Ø, the external burst signal and the CDG burst signal are inputted to the PAL ID circuit 5Ø, and the phase difference between the external burst signal and the CDG burst signal is detected by the phase-comparison circuit 52 shown in Figure 3. Since the phase difference is Ø at a time that the polarities are coincident with each other, and the phase difference is 9Ø degrees at a time that the polarities are not coincident, the signal shown in Figure 4(C) or Figure 4(F) is outputted from the phase-comparison circuit 52.

On the other hand, from the phase-comparison circuit 1Ø4 having the same structure as that of the phase-comparing circuit 52 within the PAL ID circuit 5Ø, a signal of a rectangular form is outputted because the phase difference between the external burst signal and the signal a is 45 degrees.

It is to be noted that as the 1H polarity detection circuit of the PAL ID circuit 5Ø of Figure 1Ø embodiment, a 1H polarity detection circuit 54' shown in Figure 12 is used.

An output from the phase-comparison circuit 1∅4 is integrated by an LPF 56' of the 1H polarity detection circuit 54' and become an output $V_{45}$ so as to inputted to the comparators 58 and 62 of the 1H polarity detection circuit 54'. In addition, the LPF 56' is equal to the LPF 56, and therefore, R11=R1 and C4=C1.

The output $V_{45}$ is shown in Figure 13, and a relationship between the outputs $V_{9\emptyset}$ and $V_{45}$ is represented by the following equation.

$$V_{45} = V_{9\emptyset} \times (1\text{-sin }45) \fallingdotseq V_{9\emptyset} \times \emptyset.293$$

where, the output $V_{9\emptyset}$ indicates the output of the LPF 56 of a case where the output of the phase-comparison circuit 52 becomes as shown in Figure 4(F). In addition, the output $V_{\emptyset}$ indicates the output of the LPF 56 of a case where the output of the phase-comparison circuit 52 becomes as shown in Figure 4(C). As shown in Figure 13, the output $V_{45}$ being the reference value always exists between the outputs $V_{\emptyset}$ and $V_{9\emptyset}$.

Then, the outputs $V_{\emptyset}$ and $V_{9\emptyset}$ which are both integration values of the output of the phase-comparison circuit 52 are compared with the reference (output $V_{45}$) by the 1H polarity detection circuit 54', and it is determined whether or not the polarities are coincident with each other.

Thus, as the reference values for the comparators 58 and 62, the integration value (output $V_{45}$) of the output of the phase-comparison circuit 1∅4 is used rather than a fixed value. Therefore, even if the external composite video signal is a weak electric field signal, or even if the output $V_{9\emptyset}$ is decreased because the external composite video signal, i.e., the external burst signal is small, since the output $V_{45}$ is also decreased, no malfunction occurs in the 1H polarity detection circuit 54 and thus the PAL ID circuit 5∅. Furthermore, even if the output $V_{\emptyset}$ is increased because the phase difference form 9∅ degrees at a time that the polarities are not coincident with each other between the external burst signal and the CDG burst signal occurs, or the balance of the phase-comparison circuit 5∅ is destroyed, since the output $V_{45}$ is also increased, no malfunction occurs in the 1H polarity detection circuit 54 and thus the PAL ID circuit 5∅. That is, the reference value is adaptive.

Furthermore, other than that the same or similar advantages are obtainable by Figure 1∅ embodiment as that Figure 1 embodiment, further advantages can be expected.

More specifically, normally, as a burst signal of the synthesized video signal after the superimposing, the graphics burst signal being stable is used. At this time, if the phases of the external burst signal and the CDG (graphics) burst signal are not coincident with each other, a hue of the external composite video signal becomes to be changed before and after the superimposing. In order to prevent such a phenomenon, it is necessary to make the phases of the external burst signal and the CDG burst signal be coincident with each other by manually adjusting the phase-shift amount of the phase-shifter 2∅ so as

to change the phase of the burst synchronization clock being inputted to the color encoder 28; however, according to this embodiment, by providing the phase-comparison circuit 1∅6 and the filter 1∅8 as shown in Figure 1∅, it is possible to automatically adjust the phases of the external burst signal and the CDG burst signal. Accordingly, it becomes unnecessary to adjust with complex manual operations.

In addition, the present invention is applicable to a superimposing circuit in which a graphics composite video signal obtained from a subcode of a laser disc and the external composite video signal are superposed.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A superimposing circuit by which an external composite video signal of a PAL system and a graphics composite video signal are displayed in a superimposed manner on a screen, characterized in that said superimposing circuit comprises:

   a clock generating means (18, 2∅) for generating a clock which is in synchronous with an external burst signal included in the external composite video signal;

   an encoder (28) for producing the graphics composite video signal on the basis of the clock;

   a polarity detection means (5∅) for detecting polarities of a graphics burst signal included in the graphics composite video signal and the external burst signal; and

   a polarity coincidence means (28, 7∅, 72, 74) for making the polarities of the external burst signal and the graphics burst signal coincident with each other on the basis of an output of the polarity detection means.

2. A superimposing circuit according to claim 1 characterized in that said polarity detection means includes a phase-comparison means (5∅) for comparing phases of the external burst signal and the graphics burst signal, and a 1H polarity detection means (54, 54') for detecting whether or not the phases of the external burst signal and the graphics burst signal are coincident with each other by comparing an output of the phase-comparison means and a reference value (Ref1).

3. A superimposing circuit according to claim 2 characterized in that the 1H polarity detection means (54') includes a means (56') for setting said reference value in association with the external burst signal.

4. A superimposing circuit according to any one of claims 1 to 3 characterized in that said encoder includes a polarity changeover means (74) for changing-over the polarity of the graphics burst signal, and said polarity coincidence means (7Ø, 72) controls the polarity changeover means in response to the output of said polarity detection means.

5. A superimposing circuit according to any one of claims 1 to 4 characterized in that said superimposing circuit further comprises a burst presence/absence detection means (76) for detecting presence or absence of the external burst signal, wherein said polarity coincidence means is controlled on the basis of an output of the burst presence/absence detection means.

6. A superimposing circuit by which an external composite video signal and a graphics composite video signal are displayed in a superimposed manner on a screen characterized in that said superimposing circuit comprises:

    a phase-comparison means (1Ø6) for comparing phases of an external burst signal included in the external composite video signal or a synchronization signal which is in synchronous with the external burst signal and a graphics burst signal included in the graphics composite video signal; and

    a phase-shifting means (1Ø8, 2Ø) for making the phases of the external burst signal and the graphics burst signal to be coincident with each other on the basis of an output of the phase-comparison means.

FIG. 1

FIG. 2

EP 0 696 876 A2

FIG. 3

**FIG. 4**

A ) EXTERNAL BURST

B ) CDG BURST

C ) OUTPUT OF PHASE COMPARISON

D ) EXTERNAL BURST

E ) CDG BURST

F ) OUTPUT OF PHASE COMPARISON

**FIG. 5**

FIG. 6

COINCIDENCE                          INCOINCIDENCE

(A) EXTERNAL BURST

(B) CDG BURST

(C) PALID

(D) H PULSE

(E)

(F) LINE INVERTING

(G) +135° BURST DATA

(H) -135° BURST DATA

(I) OUTPUT BURST DATA

FIG. 7

FIG. 8

FIG. 9

FIG. 10

FIG. 11

FIG. 13

FIG. 12